# EUROPÄISCHE PATENTSCHRIFT

(11) **EP 2 071 217 B1**
(45) Veröffentlichungstag und Bekanntmachung des Hinweises auf die Patenterteilung: **21.07.2010**
(21) Anmeldenummer: 07122909.0
(22) Anmeldetag: 11.12.2007
(51) Int. Cl.: F16K 1/44, F16K 1/54, F16K 39/02

(54) **Einrichtung zum Sperren und Freigeben einer Fluidströmung sowie zugehöriges Verfahren**
Device for blocking and allowing a fluid stream and accompanying method
Dispositif de verrouillage et de libération d'un écoulement de fluide et son procédé

(43) Veröffentlichungstag der Anmeldung: 17.06.2009
(73) Patentinhaber: Elster GmbH, 49504 Lotte (Büren) (DE)
(72) Erfinder: Temme, Guido, 49186 Bad Iburg (DE); Wallmeyer, August, 49509 Recke (DE)
(74) Vertreter: Lilie, Philipp

(56) Entgegenhaltungen:
- EP-A- 0 631 075
- WO-A-01/90611
- WO-A-92/17721
- US-A1- 2001 032 678
- US-A1- 2002 026 960
- US-A1- 2003 226 603

## Beschreibung

Die Erfindung betrifft eine Einrichtung zum Sperren und Freigeben einer Fluidströmung sowie ein zugehöriges Verfahren. Insbesondere betrifft die Einrichtung eine Sperr- und Freigabeeinrichtung für eine Fluidströmung, wobei die Einrichtung einen Fluid-Einlass und einen Fluid-Auslass aufweist und wobei zwischen Einlass und Auslass eine Hauptöffnung im Fluidweg angeordnet ist. Die Hauptöffnung weist ein zugeordnetes Hauptsperrmittel auf, welches zu der Hauptöffnung wenigstens eine Schließstellung und eine Offenstellung einnehmen kann. Das Hauptsperrmittel ist mit Hilfe einer Betätigungseinrichtung aus der Offenstellung in die Schließstellung bewegbar und kann in der Schließstellung gehalten werden. Das Hauptsperrmittel ist in der Schließstellung derart angeordnet, dass ein am Fluid-Einlass gegenüber dem Fluid-Auslass erhöhter Fluiddruck eine das Hauptsperrmittel in der Schließstellung haltende Andruckkraft hervorruft. Ein Fluid-Überstromweg ist zwischen Fluideinlass und Fluidauslass vorgesehen ist, welcher durch die Betätigungseinrichtung schließbar ist.

Einrichtungen der genannten Art werden regelmäßig in Ventilanordnungen in der Gasversorgung bzw. allgemein der Fluidversorgung eingesetzt. Beispielsweise werden derartige Einrichtungen in Gaszählern oder Gasreglern verwendet.

Es ist oft erforderlich, einen Fluidstrom zwischen Fluid-Einlass und Fluid-Auslass einer derartigen Einrichtung wahlweise freizugeben oder zu unterbrechen. Beispielsweise sind im Stand der Technik Gaszähler bekannt, die eine Gasversorgung eines Kundennetzes (z.B. in einer Wohnung oder Haus) freigeben oder unterbrechen, je nachdem ob der Kunde eine Zahlung für die Gasversorgung geleistet hat. Eine derartige Kontrolle der Zahlung kann beispielsweise über sogenannte Prepaid-Verfahren realisiert sein oder über eine Fernsteuerung durch den Gasversorger, wobei ggf. eine Fernkommunikation zwischen dem sperrenden und freigebenden Gerät und dem Versorger aufgebaut wird.

Aus der WO 92/17721 ist eine Ventilanordnung bekannt, bei welcher zur Verringerung einer Öffnungskraft ein Durchflussweg in zwei Phasen geöffnet wird. In der ersten Öffnungsphase wird eine Öffnung mit verkleinertem Querschnitt freigegebenen und in der zweiten Phase, wenn durch die kleinere Öffnung bereits ein Druckausgleich stattgefunden hat, wird die Hauptöffnung geöffnet.

In dem Fall, dass die Gasversorgung an einem Anschluss zu sperren ist, wird ein entsprechendes Ventil geschlossen und der Fluidstrom unterbrochen. Dieser Vorgang bringt jedoch als Problem mit sich, dass bei erneuter Freischaltung des Gasanschlusses wieder Gas in das Leitungsnetz des Kunden und in entsprechende Verbraucher einströmt, die am Leitungsnetz angeschlossen sind. Falls ein Verbraucher zum Zeitpunkt der Freigabe aktiv ist, also Gas in diese Verbraucher einströmen kann, kann es zu einem Ausströmen von Gas und einer erheblichen Gefährdung durch unverbrauchtes Gas kommen. Ein solcher Fall kann insbesondere dann auftreten, wenn ein Verbraucher zum Zeitpunkt des Sperrens des Gaszuflusses aktiv war oder während der Dauer der Sperrung aktiviert wird.

Im Stand der Technik sind sogenannte Gasmangel-Sicherungen bekannt, die zu diesem Zweck vor entsprechende Geräte in den Fluidweg eingebaut werden können und den Fluidweg sperren, falls ein versorgerseitiger Gasmangel auftritt. Diese leiten erst wieder Gas hindurch, falls ein Druckausgleich auf beiden Seiten der Gasmangelsicherung erfolgt ist und daher im Versorgernetz und Verbrauchernetz ausgeglichene Druckverhältnisse herrschen.

Außerdem sind verschiedene Arten der Absicherung über Sensoren und elektronische Auswertungen bekannt, die eine Durchfluss- oder Drucküberwachung erlauben und ggf. einen entsprechenden Anschluss sperren.

Aus Sicherheitsgründen ist es jedoch erstrebenswert, eine solche Absicherung derart auszubilden, dass es zu keiner Fehlfreigabe des Gases aufgrund von Fehlverarbeitungen oder falschen Sensorsignalen oder -auswertungen kommen kann.

Die Erfindung hat die Aufgabe, eine verbesserte Einrichtung zum Sperren und erneuten Freigeben einer Fluidströmung bereitzustellen, welche sicher im Gebrauch und einfach und günstig in der Herstellung ist.

Die erfindungsgemäße Lösung wird durch eine Einrichtung mit den Merkmalen des Patentanspruchs 1 bereitgestellt.

Erfindungsgemäß ist bei der Einrichtung gemäß dem Oberbegriff das Hauptsperrmittel in der Schließstellung so angeordnet, dass ein Druckgefälle vom Fluid-Einlass gegenüber dem Fluid-Auslass eine das Hauptsperrmittel in die Schließstellung drängende bzw. in dieser haltende Andruckkraft hervorruft. Das Hauptsperrmittel wird also in seiner Schließstellung durch das entsprechende Druckgefälle gehalten. Zusätzlich zu dieser Kraft kann jedoch in der Schließstellung eine zusätzliche Haltekraft von der Betätigungseinrichtung ausgeübt werden.

In der Einrichtung ist außerdem ein Fluid-Überstromweg vorgesehen, der einen sperr- und freigebbaren Fluiddurchgang zwischen Fluid-Einlass und Fluid-Auslass bildet und der durch die Betätigungseinrichtung zu öffnen und zu schließen ist.

Das Hauptsperrmittel ist durch die Betätigungseinrichtung aus der Öffnungsstellung in die Schließstellung bewegbar. Aus der Schließstellung ist das Hauptsperrmittel durch die Betätigungseinrichtung freigebbar. Freigeben bedeutet in diesem Sinn, dass dem Hauptsperrmittel die Bewegung aus der Schließstellung heraus ermöglicht (freigegeben) wird, es jedoch nicht aktiv aus dieser hinausbewegt wird. Das Hauptsperrmittel wird bei der Freigabe dementsprechend nicht unbedingt bewegt, sondern lediglich zur Bewegung freigegeben, also entsperrt. Während die Bewegung in die Schließstellung mit mechanischem Zwang erfolgt, ist es bei der Freigabe zwar möglich, dass sich das Hauptsperrmittel unmittelbar in die Öffnungsstellung bewegt, es kann jedoch auch in der Schließstellung verbleiben. Letzteres wird insbesondere dann der Fall sein, wenn die noch bestehende Druckdifferenz, die auf das Hauptsperrmittel in der Schließstellung einwirkt, dieses in der Schließstellung hält. Das Hauptsperrmittel kann derart bistabil ausgelegt sein, dass es seine stabilen Zustände in der Öffnungs- und der Schließstellung einnimmt. Die Freigabe gibt lediglich vor, dass von der Betätigungseinrichtung keine weitere haltende Andruckkraft auf das Hauptsperrmittel mehr ausgeübt wird.

Außerdem kann die Betätigungseinrichtung den Fluid-Überstromweg öffnen. Diese Öffnung des Fluid-Überstromweges kann zeitgleich mit der Freigabe des Hauptsperrmittels erfolgen, die Freigabe kann jedoch der Öffnung des Fluid-Überstromweges auch vorgeschaltet oder nachgelagert sein. Diese Öffnung des Überstromweges erfolgt aktiv, die Öffnung wird also unbedingt herbeigeführt, im Gegensatz zu der vorstehend beschriebenen Freigabe.

Die Einrichtung ist derart ausgebildet, dass auf das Hauptsperrmittel in der Freigabestellung eine Öffnungskraft zur Bewegung des Hauptsperrmittels in die Offenstellung ausübbar ist. Diese Öffnungskraft kann kontinuierlich auf das Hauptsperrelement in der Freigabestellung ausgeübt werden, z.B. durch mechanische Vorspannung oder Einwirken einer Magnetkraft. Die Kraft kann jedoch auch diskontinuierlich ausgeübt werden, z.B. indem zeitweise ein Antrieb angesteuert wird, um eine limitierte Testkraft in Richtung der Öffnung auszuüben. Das Hauptsperrmittel ist demnach in der Freigabestellung nicht von der Betätigungseinrichtung in der Schließstellung gehalten, hat sich jedoch ggf. noch nicht aus dieser herausbewegt. Auf das Hauptsperrmittel wirkt in diesem Zustand kontinuierlich die erwähnte Druckdifferenz, die es in die Schließstellung drängt. In die andere Richtung wirkt zumindest zeitweise die Öffnungskraft bzw. Testkraft, die es aus der Schließstellung in die Öffnungsstellung drängt. Das Hauptsperrmittel bleibt entsprechend nur so lange in der Schließstellung, wie der Fluiddruck, welcher am Fluid-Einlass herrscht, gegenüber dem Fluid-Auslass erhöht ist und die resultierende Druckkraft die Kraft der Öffnungskraft überkompensiert.

Eine Öffnungskraft kann mit beliebigen kraftausübenden Mitteln realisiert werden, z.B. Federn, flexiblen Materialien, Magnetkräften, Motorkopplungen oder ähnlichem.

Soll die Einrichtung gesperrt werden, so wird das Hauptsperrmittel in die Schließstellung bewegt und die Überstromöffnung durch die Betätigungseinrichtung geschlossen. Dementsprechend findet kein Fluidfluss zwischen Gas-Einlass und Gas-Auslass statt. Soll hingegen der Fluidstrom wieder freigegeben werden, so wird lediglich der Überstromweg geöffnet, das Hauptsperrmittel jedoch freigegeben. Je nach Druckdifferenz verbleibt es in seiner Schließstellung. Der Überstromweg ist derart bemessen, dass bei einem vorgebenen Gasdruck am Gas-Einlass (z. B. aus dem Versorgungsnetz) ein vorgegebener unbedenklicher Volumenstrom des Fluids durch die Überstromöffnung oder den Überstromweg nicht überschritten wird. Dementsprechend gelangt durch den Überstromweg keine gefahrenrelevante Fluidmenge bzw. Gasmenge zum Fluid-Auslass und in das.Gasnetz eines Verbrauchers. Sind sämtliche Verbraucher im auslassseitigen Gasnetz gesperrt, so baut sich über den Überstromweg auf der Gas-Auslassseite ein dem Gas-Einlassdruck entsprechender Druck auf. Dies führt dazu, dass die durch die Druckdifferenz ausgeübte Kraft auf das Hauptsperrmittel nachlässt und schließlich verschwindet, so dass das Hauptsperrmittel durch die Vorspannung in die Öffnungsstellung gedrängt wird. In dieser Öffnungsstellung ist schließlich wiederum eine normale Öffnungsstellung eines herkömmlichen Ventils erreicht.

In seiner Funktion erfüllt die erfindungsgemäße Einrichtung dementsprechend sowohl die Funktion eines herkömmlichen Sperrventils als auch einer äußerst robusten und verlässlichen Sicherheitseinrichtung. Ein wesentlicher Vorteil dieser Einrichtung ist in dem autonomen Betrieb zu sehen, der einen Einsatz der Einrichtung und eine Aktivierung der Gasversorgung ohne Benutzereingriff ermöglichen kann. Eine Benutzerführung, z.B. durch an der Einrichtung angebrachte Displays oder in Rücksprache mit einem technischen Support des Versorgers, wird ebenfalls überflüssig.

Gegenüber einem herkömmlichen Ventil weist die erfindungsgemäße Einrichtung einen zusätzlichen Zustand auf, nämlich den der Freigabe des Ventils aus der Sperrstellung bzw. Schließstellung. In der Schließstellung sind sämtliche Fluidverbindungen zwischen Einlass und Auslass unterbrochen, in der Öffnungsstellung sind sämtliche Fluidwege freigegeben. In der Freigabestellung hingegen ist lediglich ein Überstromweg bzw. Bypass mit verringertem Durchfluss freigegeben und die Hauptöffnung mit dem Hauptsperrmittel gesperrt. So findet lediglich ein bezüglich seiner Gefährdung unerheblicher Fluidstrom statt, der jedoch zu einem Druckausgleich und schließlich einer vollständigen Öffnung der Einrichtung führt.

Durch die Ausbildung der Anordnung kann diese äußerst verlässlich und ohne Wartungseingriff bzw. Bedieneingriff verwendet werden. Zum Beispiel kann eine derartige Einrichtung durch ein Signal von entfernter Stelle zur Gasversorgung freigegeben werden (z. B. nachdem eine Zahlung seitens des Verbrauchers erfolgt ist) ohne dass ein Risiko besteht, Gas durch nichtgeschlossene Verbraucher austreten zu lassen. Erst wenn der Kunde sämtliche Gasverbraucher abgeschaltet hat und daher ein Gasdruck im Kundennetz aufgebaut werden kann, wird das Ventil vollständig öffnen.

Die Betätigungseinrichtung der erfindungsgemäßen Einrichtung kann beliebig ausgestaltet sein, z. B. kann sie als einfacher und durch einen Benutzer zu betätigender Tastmechanismus oder als motorbetriebene Einrichtung ausgebildet sein, die auch fernsteuerbar sein kann.

Welchen Fluidstrom der Fluid-Überstromweg bei Öffnung durchtreten lässt ist einerseits von der Druckdifferenz und andererseits vom Durchstromweg (Länge und Querschnitt) abhängig. Regelmäßig sind von Gasversorgern Höchstgrenzen eines durchtretenden Volumenstroms einzuhalten, die nicht zu einem zündfähigen Gemisch im Installationsbereich eines Kunden führen. Derartige Höchstgrenzen sind dem Fachmann bei der Gas- bzw. Fluidversorgung allgemein bekannt.

In einer Weiterbildung der Erfindung ist das Hauptsperrmittel mit einem Ventilteller ausgebildet, welcher an die Begrenzungen der Hauptöffnung dichtend anlegbar ist.

Grundsätzlich sind zwar beliebige Dichtmöglichkeiten für die Ausgestaltung des Hauptsperrmittels denkbar, ein Ventilteller ist jedoch aufgrund der flachen Anlage und der bewährten Funktionalität besonders bevorzugt. Bei einem derartigen Ventilteller sind regelmäßig die Quetschkräfte und das Festsetzen gegenüber anderen Dichtungen (z. B. Stopfendichtungen) günstiger. So kann die erfindungsgemäße Vorrichtung auch nach längeren Sperrzeiten aufgrund der möglicherweise geringen mechanischen Vorspannung bei Freigabe wieder verlässlich gelöst werden und die Einrichtung geöffnet werden.

In einer Weiterbildung der Erfindung ist der Überstromweg als Durchgangsöffnung in dem Hauptsperrmittel ausgebildet.

Wird der Überstromweg im Hauptsperrmittel selbst ausgebildet, so kann eine Kopplung der Betätigungseinrichtung sowohl mit dem Hauptsperrmittel als auch dem Überstromweg besonders einfach erfolgen. Der Überstromweg kann beispielsweise als Durchgangsöffnung in dem Hauptsperrmittel ausgebildet sein, welche von der Betätigungseinrichtung schließbar und öffnenbar ist. Beispielsweise kann die Betätigungseinrichtung das Hauptsperrmittel in die Schließstellung drängen und im Anlagebereicht zwischen Betätigungseinrichtung und Hauptsperrmittel gleichzeitig die Durchgangsöffnung verschließen. Andere Ausgestaltungen sind ebenfalls denkbar, z. B. eine gezielt unterschiedliche Dichtung des Hauptsperrmittels je nach darauf ausgeübtem Druck. Es ist lediglich jederzeit sicherzustellen, dass die Fluidströme durch die Hauptöffnung und den Überstromweg beim Schließen gesperrt werden und in der Freigabestellung lediglich ein unterhalb eines kritischen Stromes verringerter Fluidstrom durch den Überstromweg hindurch tritt.

Vorzugsweise weist die Einrichtung eine Betätigungseinrichtung mit einem bewegbaren Halteabschnitt auf, auf den das Hauptsperrmittel zwischen zwei Anschlägen verschiebbar gehalten ist. Ein erster der Anschläge ist derart angeordnet, dass dieser beim Bewegen der Betätigungseinrichtung und des Hauptsperrmittels in die Schließstellung am Hauptsperrmittel anliegt.

Der erste Anschlag hält dementsprechend das Hauptsperrmittel in der Schließstellung. Zwischen den beiden Anschlägen ist das Hauptsperrmittel jedoch an der Betätigungseinrichtung zwischen den Anschlägen verschiebbar, wodurch die Freigabe des Hauptsperrmittels realisierbar ist. Durch die Verschiebbarkeit des Hauptsperrmittels an der Betätigungseinrichtung kann erreicht werden, dass die Haltekraft der Betätigungseinrichtung auf das Hauptsperrmittel bei Freigabe aufgehoben wird, das Hauptsperrmittel jedoch dennoch in seiner dichtenden Stellung verbleibt.

Vorzugsweise ist der erste Anschlag in der Freigabestellung von dem Hauptsperrmittel beabstandet und bildet eine Endlage für das Hauptsperrmittel in der Öffnungsstellung.

Beim Freigeben bewegt sich also der erste Anschlag aus der Anlage am Hauptsperrmittel heraus und verschiebt sich in die Öffnungsstellung. Das Hauptsperrmittel bleibt jedoch in seiner Schließstellung, sofern die Druckdifferenz es dort hält. Bei der Bewegung verschieben sich entsprechend das Hauptsperrmittel und die Betätigungseinrichtung zueinander.

In einer Weiterbildung der Erfindung ist ein Federelement zwischen einem der Anschläge und dem Hauptsperrmittel angeordnet, durch welches das Hauptsperrmittel in der Freigabestellung vorgespannt ist.

Bei Freigabe verbleibt entsprechend das Hauptsperrmittel entgegen der Vorspannung in der Sperrstellung, da diese Vorspannung durch die Druckdifferenz überkompensiert wird. Die Vorspannung kann gegenüber einem beliebigen der Anschläge erfolgen, z. B. als ziehende Federkraft gegenüber dem ersten Anschlag oder als drückende Federkraft gegenüber dem zweiten Anschlag. Bei einer solchen Ausgestaltung wird die Vorspannkraft erst angelegt, wenn das Hauptsperrmittel freigegeben wird. Es ist jedoch auch möglich die Vorspannkraft bereits mit dem Bewegen des Hauptsperrmittels in die Schließstellung anzulegen.

Außerdem sind bei der Einrichtung Arretiermittel zum arretieren des Hauptsperrmittels in der Schließstellung vorgesehen. Diese Arretiermittel können z.B. als lösbare Rastmittel oder sonstige mechanische Sperren ausgebildet sein. Die Arretiermittel weisen eine Differenzdrucksperre auf, die in Abhängigkeit von einer auf sie einwirkenden Druckdifferenz verschiedene Schalt- oder Betätigungszustände einnehmen kann. Beispielsweise kann eine bi-stabile Membran (eine Art Knackfrosch) verwendet werden, welche je nach beidseitig einwirkender Druckdifferenz einen Schalter oder Mechanismus betätigen kann. Die Arretiermittel mit der Differenzdrucksperre sind derart ausgebildet, dass sie das Hauptsperrmittel arretieren, wenn ein vorgegebener minimaler Differenzdruck zwischen Fluid-Einlass und Fluid-Auslass auf die Differenzdrucksperre einwirkt.

Ein Fluid-Überstromweg ist zwischen Fluid-Einlass und Fluid-Auslass vorgesehen, welcher durch die Betätigungseinrichtung beim Bewegen des Hauptsperrmittels in die Schließstellung schließbar ist. Das Hauptsperrmittel ist durch die Betätigungseinrichtung aus der Schließstellung freigebbar und der Fluid-Überstromweg ist von der Betätigungseinrichtung zu öffnen, so dass das Hauptsperrmittel in der freigegebenen Stellung nur durch die Arretiermittel gehalten ist.

Die Arretiermittel halten das Hauptsperrmittel jedoch nur in dieser Stellung, wenn die Druckdifferenz größer als eine vorgegebene Minimaldifferenz ist. Steigt der Fluiddruck auf der Ausgangsseite aufgrund des Fluidstromes durch den Überstromweg an (weil aus Verbraucher ausgangsseitig geschlossen sind), so wird diese minimale Druckdifferenz nach einiger Zeit unterschritten und die Arretiermittel geben das Hauptsperrmittel frei. Dann bewegt sich das Hauptsperrmittel in die Öffnungsstellung. Bleibt die Druckdifferenz oberhalb der vorgegebenen minimalen Druckdifferenz, bleibt die Hauptsperreinrichtung arretiert und in der Schließstellung.

Weitere bevorzugte Ausführungsformen der Erfindung sind in den Unteransprüchen angegeben, deren Vorteile auch aus der nachfolgenden Beschreibung der bevorzugten Ausführungsformen deutlich werden.

Die Erfindung wird nun anhand der beiliegenden Zeichnung näher beschrieben.
Figur 1a zeigt eine erfindungsgemäße Einrichtung zum Sperren und Freigeben einer Fluidströmung gemäß einem ersten Ausführungsbeispiel, wobei sich die Einrichtung in der Öffnungsstellung befindet.
Figur 1b zeigt die Einrichtung gemäß dem ersten Ausführungsbeispiel, wobei sich die Einrichtung in der Schließstellung befindet.
Figur 1c zeigt die Einrichtung gemäß dem ersten Ausführungsbeispiel, wobei sich die Einrichtung in der Freigabestellung befindet.
Figur 1d zeigt die Einrichtung gemäß dem ersten Ausführungsbeispiel, wobei sich die Einrichtung erneut in der Öffnungsstellung befindet.
Figur 2a zeigt eine Einrichtung gemäß einem zweiten Ausführungsbeispiel, wobei sich die Einrichtung in der Öffnungsstellung befindet.
Figur 2b zeigt die Einrichtung gemäß dem zweiten Ausführungsbeispiel, wobei sich die Einrichtung in der Schließstellung befindet.
Figur 2c zeigt die Einrichtung gemäß dem zweiten Ausführungsbeispiel, wobei sich die Einrichtung in der Freigabestellung befindet.
Figur 2d zeigt die Einrichtung gemäß dem zweiten Ausführungsbeispiel, wobei sich die Einrichtung erneut in der Öffnungsstellung befindet.

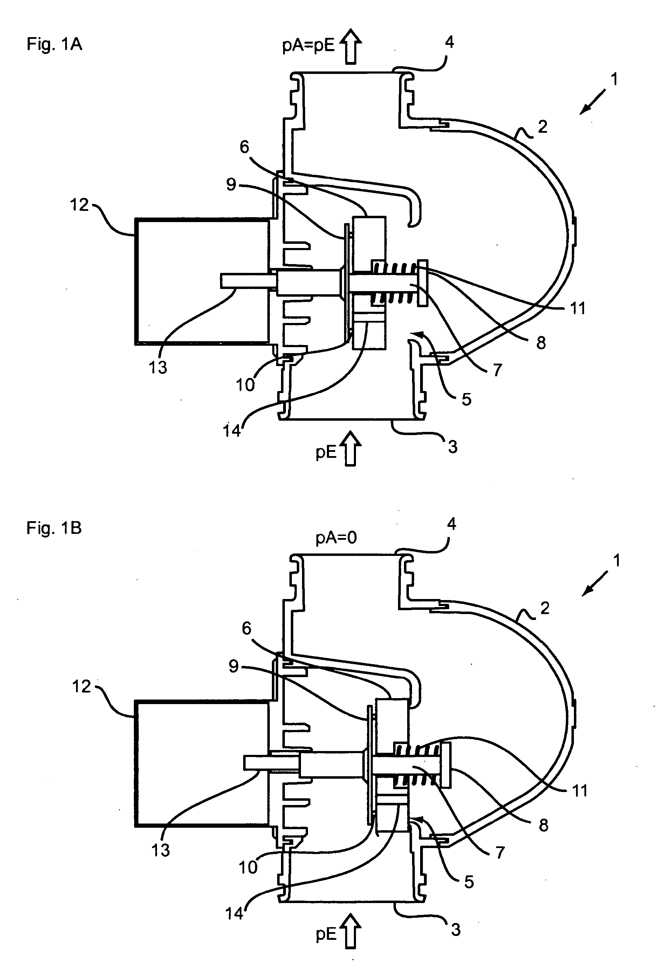

Die Einrichtung 1 aus Figur 1a weist ein Gehäuse 2 auf, an dem ein Gas-Einlass 3 und ein Gas-Auslass 4 ausgebildet sind. Zwischen Gas-Einlass 3 und Gas-Auslass 4 ist eine Hauptöffnung 5 ausgebildet, welche einen Fluidweg für ein die Einrichtung 1 durchströmendes Fluid bereitstellt. Der Öffnung 5 ist ein Hauptsperrmittel 6 in Ausbildung eines Dichttellers zugeordnet, welcher von der Hauptöffnung 5 aus gesehen stromauf, also in Richtung des Gas-Einlasses 3 angeordnet ist. In dem Hauptsperrmittel 6 ist ein Überstromweg bzw. Bypass als Durchgangskanal 14 ausgebildet. Die Funktion des Überstromweges 14 wird unten näher erläutert.

Der Dichtteller 6 ist auf einem schaftartigen Abschnitt 7 einer Betätigungseinrichtung geführt. Beidseitig des Abschnitts 7 sind Anschläge bzw. Anlagen 8 und 9 ausgebildet. Der Anschlag 9 ist als Teller ausgebildet, der über eine Ringdichtung 10 an das Hauptsperrmittel 6 anlegbar ist. Das Hauptsperrmittel ist außerdem mittels einer Feder 11 gegen den Anschlag 8 vorgespannt.

Die Betätigungseinrichtung weist ferner einen Antrieb 12 auf, der mit einem Abschnittsschaft 13 gekoppelt ist, über den der Abschnitt 7 sowie die beiden Anschläge 8 und 9 axial verstellbar bzw. verschiebbar sind, so dass das Hauptsperrmittel 6 unter Einwirkung des Telleranschlags 9 in eine Schließstellung zur Hauptöffnung 5 bewegbar ist.

Die gesamte Betätigungseinrichtung umfasst in dem gezeigten Beispiel die Elemente 7, 8, 9, 10, 12 und 13.

Die Figur 1a zeigt die erfindungsgemäße Einrichtung in der Öffnungsstellung, d. h. ein eingangsseitig angelegter Gasdruck pE führt (bei offener Ausgangsseite) zu einem Fluidstrom durch die Einrichtung 1 und der ausgangsseitige Gasdruck pA entspricht (Druckverluste in der geöffneten Einrichtung unberücksichtigt) dem Eingangsdruck pE. Ist die Ausgangsseite gesperrt (z.B. sämtliche Verbraucher ausgeschaltet), so baut sich in der Einrichtung ein einheitlicher statischer Druck auf.

Ausgehend von dieser Öffnungsstellung aus Figur 1A kann die Einrichtung für eine Sperrung des Gasstroms geschlossen werden. Dazu bewegt die Betätigungseinrichtung mittels des Antriebs 12 und über den Schaft 13 die Anschläge 8 und 9 mit dem zwischenliegenden Abschnitt 7 axial in Richtung der Hauptöffnung 5, so dass der Ventilteller 6, geschoben von dem tellerartigen Anschlag 9, an die Randbegrenzungen der Hauptöffnung 5 angelegt wird. Die so erreichte Schließstellung ist in Figur 1b gezeigt.

Wie vorstehend erwähnt, ist in dem Hauptsperrmittel 6 ein Durchgangskanal (Durchstromöffnung) 14 ausgebildet. Dieser ist so plaziert, dass er innerhalb des Dichtbereiches der Ringdichtung 10 liegt, so dass bei Andruck des Anschlags 9 und der Dichtmittel 10 an das Hauptsperrmittel 6 der Durchgangskanal 14 gegenüber dem Fluiddruck pE gedichtet ist.

In der Sperrstellung liegt außerdem das Hauptsperrmittel 6 dichtend an der Hauptöffnung 5 an. Damit sind beide Durchgangswege für das Fluid (Hauptöffnung 5 und Durchstromkanal 14) gesperrt. Der Eingangsdruck pE lastet in dieser Schließstellung auf dem Hauptdichtelement 6 und übt daher eine schließende Kraft auf das Dichtelement 6 aus, sofern der Eingangsdruck pE gegenüber dem Ausgangsdruck pA erhöht ist. Die Druckdifferenz pE-pA ist umso größer, je geringer der ausgangsseitige Druck pA ist. Waren zum Zeitpunkt des Sperrens der Einrichtung Verbraucher auf der Ausgangsseite der Einrichtung aktiv, so sinkt der Ausgangsdruck durch die geöffneten Verbraucher auf Atmosphärendruck ab, so dass die Druckdifferenz pE-pAtmospähere Kraft auf das Hauptdichtmittel ausübt.

Aus dieser Sperrstellung soll es nun möglich sein, die Sperrung des Gasstromes wieder freizugeben, jedoch nur für den Fall, dass daraus kein unbeaufsichtigtes Ausströmen von Gas resultiert. Es kann nur dann von sicheren Bedingungen für die Öffnung ausgegangen werden, wenn ausgangsseitig alle Gasverbraucher gesperrt sind, das ausgangsseitige Netz also geschlossen bzw. dicht ist.

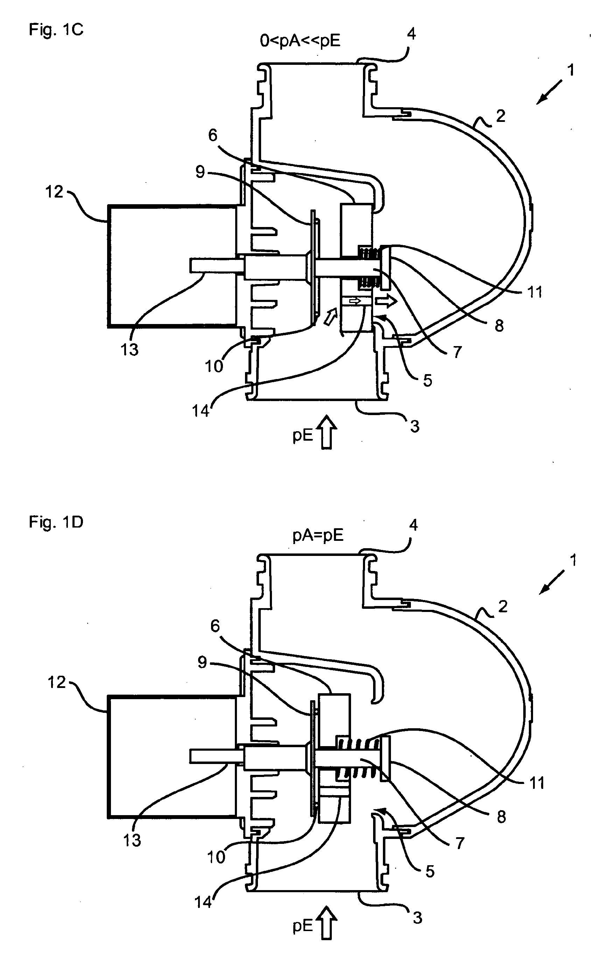

Wird in dieser Sperrstellung die Einrichtung betätigt, um die Einrichtung wieder zu öffnen, so führt dies zunächst zur in Figur 1c gezeigten Freigabe der Einrichtung. Ein derartiges Öffnungskommando kann beispielsweise durch Fernsteuerung des Antriebs 12 erfolgen. Figur 1c zeigt den Fall, dass ausgangsseitig der Gasdruck vollständig abgebaut wurde, z. B. durch einen aktiven Gasverbraucher zum Zeitpunkt der Sperrung der Einrichtung.

Wie in Figur 1c gezeigt, betätigt der Antrieb 12 den Schaft 13 und zieht den Anschlag 9 mit den Dichtringen 10 in axialer Richtung zurück. Der den Ausgangsdruck übersteigende Eingangsdruck lastet jedoch weiterhin auf dem Dichtteller 6 und drückt diesen gegen die Hauptöffnung 5. Durch das Zurückbewegen der Betätigungseinrichtung wird die Feder 11 zwischen Dichtmittel 6 und Anlage 8 komprimiert und bringt nun eine Federkraft auf das Dichtmittel 6 auf, welches dieses in Richtung der Öffnungsstellung vorspannt. Diese Federkraft ist jedoch zu gering, um das Hauptsperrmittel 6 entgegen der Kraft, die durch die Druckdifferenz pE-pA hervorgerufen wird, in die Öffnungsstellung zu verschieben.

In dieser in Figur 1c gezeigten Freigabestellung befindet sich jedoch der tellerförmige Anschlag 9 mit dem Dichtmittel 10 nicht länger in Anlage zu dem Dichtmittel 6, so dass die Überstromöffnung 14 freigegeben ist. Die Überstromöffnung 14 (in der Zeichnung aus Gründen der Übersichtlichkeit vergrößert dargestellt) bietet nun einen Überstromweg für das eingangsseitig mit Druck bereitgestellte Gas. Die Überstromöffnung ist jedoch so bemessen, dass selbst für den Fall, dass ausgangsseitig ein oder mehrere Verbraucher geöffnet sind und entsprechend durchgeleitetes Gas aus diesen ausströmt, keine Gefährdung durch ausströmendes Gas auftritt, da der Volumenstrom durch die Überstromöffnung stark begrenzt ist. Sind jedoch ausgangsseitig die Verbraucher geschlossen oder werden sie in diesem Zustand der Einrichtung erst geschlossen, so baut sich ausgangsseitig allmählich ein dem eingangsseitigen Druck entsprechender Druck auf. Sobald der ausgangsseitige Druck sich dem eingangsseitigen Druck angenähert hat (z. B. weil das Gasnetz des Nutzers keine Lecks oder geöffneten Verbraucher aufweist) nimmt die Druckkraft auf das Dichtmittel 6 ab (die Druckdifferenz pA-pE verringert sich) und die Federkraft der Feder 11 bewegt das Dichtmittel aus der geschlossenen Freigabestellung zurück in die Öffnungsstellung.

Dieser Zustand ist in Figur 1d erreicht und das Gasventil ist erneut vollständig geöffnet und bereit, einen erneuten Sperrvorgang einzuleiten.

Diese Einrichtung ist vollständig unabhängig von der Auslesung von Sensorwerten oder von fehleranfälligen elektronischen Verarbeitungseinrichtungen. Die Freigabe der Gassperreinrichtung erfolgt vollständig mechanisch und auf Grundlage physikalischer Prinzipien. Außerdem verhält sich die Einrichtung für den Fall, dass ausgangsseitig kein Druckmangel herrscht, wie ein normales Ventil, d.h. die vollständige Öffnung erfolgt sofort mit Freigabe, da kein Druckausgleich zum Öffnen erforderlich ist.

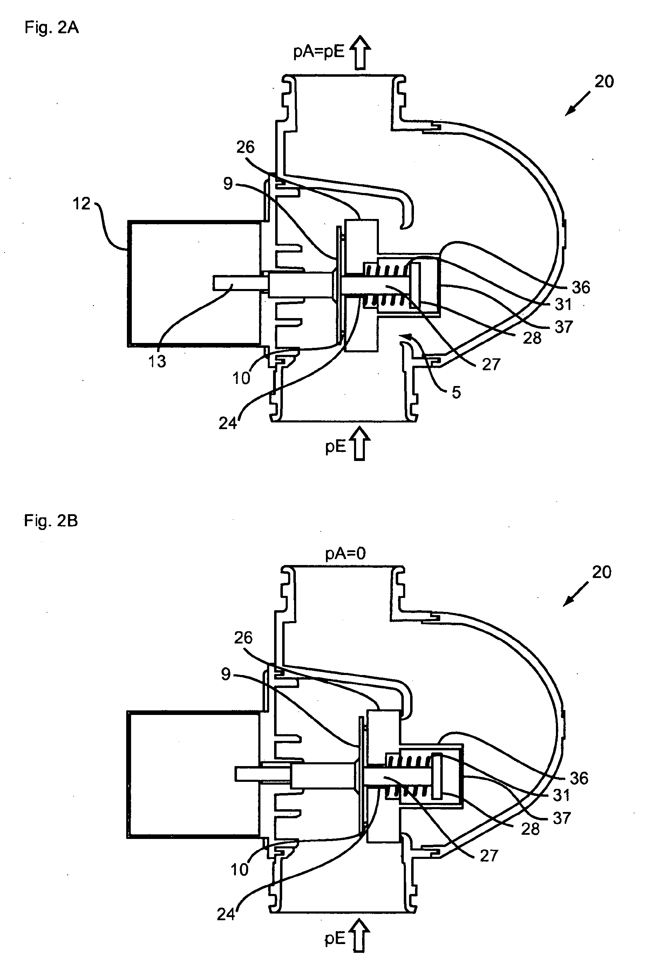

In den Figuren 2a bis 2d ist eine abgewandelte Ausführungsform der Erfindung dargestellt. Bei dieser Einrichtung 20 ist die Durchgangsöffnung 24 in dem Sperrmittel 26 um den Schaft 27 herum ausgebildet. In diesem Bereich hat also der Dichtteller 26 entweder gegenüber dem Schaft 27 ein gewisses Spiel oder der zentrale Bereich ist aus einem gasdurchlässigen Material gebildet. An dem Hauptsperrmittel 26 ist außerdem ein Ansatz 36 mit einem Hohlraum gebildet, der eine Bohrung 37 aufweist.

Diese Ausführungsform gewährleistet eine bessere Abdichtung der Hauptöffnung und erfordert geringere Fertigungstoleranzen. Der Schaft 27 mit dem Ansatz 28 und die Spiralfeder 21 liegen innerhalb des Gehäuseansatzes 36 verkapselt.

Figur 2b zeigt die Schließstellung der zweiten Ausführungsform, wobei die Durchstromöffnung 24 wiederum durch die tellerförmige Anlage 9 sowie die Dichtelemente 10 abgedichtet ist.

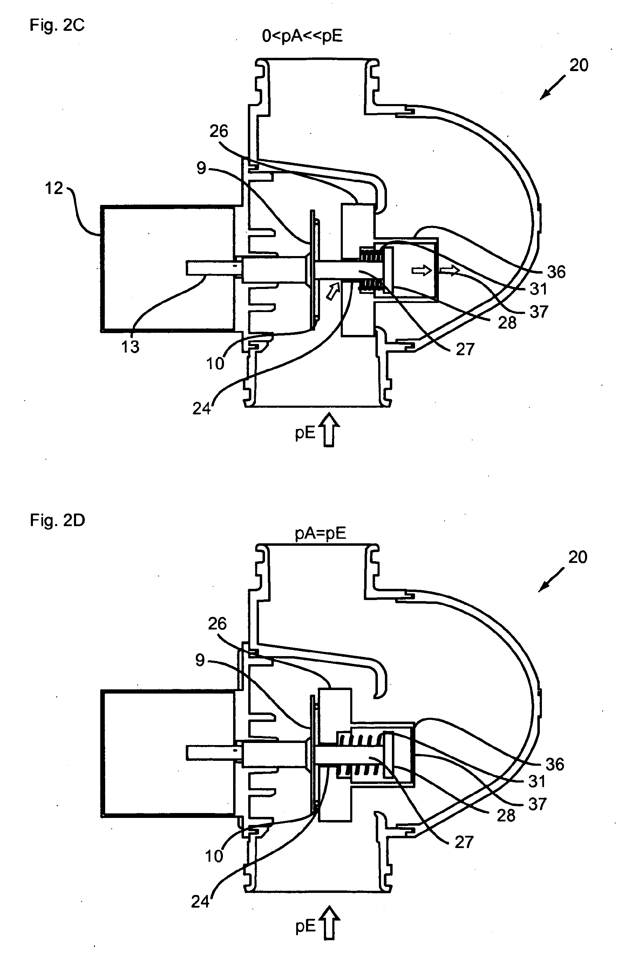

Figur 2c zeigt die Freigabestellung, in der der tellerförmige Ansatz 29 abgehoben ist und die Durchstromöffnung 24 entlang des Schaft 27 und durch die Bohrung 37 den Fluidweg freigibt.

Falls die Druckausgangsseite im Verbrauchernetz gesperrt ist, kann ein Druckausgleich stattfinden und die Einrichtung bewegt sich durch die Vorspannung der Feder 31 wieder in die Öffnungsstellung, welche in Figur 2d dargestellt ist.

Der Vorteil dieser Gestaltung liegt darin, dass das Dichtmittel 26 nicht präzise an den Schaft 27 anzupassen ist. Es kann vielmehr ein ausreichendes Spiel um den Schaft gelassen werden. Die Begrenzung des Fluidstromes erfolgt durch die Bohrung oder Düse 37, wobei diese Öffnung in baulich einfacher Weise präzise ausführbar ist.

Im Rahmen der Erfindung sind zahlreiche Abwandlungen möglich. Beispielsweise kann die Überstromöffnung bzw. der Bypass separat und beabstandet von dem Hauptsperrmittel ausgebildet sein. So kann dieser auch in einer Wandungsfläche ausgebildet sein und von der Betätigungseinrichtung zu öffnen und zu schließen sein. Je nach Einsatzgebiet ist außerdem klar, dass die Überstromöffnung unterschiedlich ausgebildet sein kann, um den verschiedenen Druckwerten auf Eingangsseite Rechnung zu tragen, so dass jederzeit nur ein unbedenklicher Volumenstrom durch die Überstromöffnung hindurch tritt und in das Leitungsnetz eines Verbrauchers gelangt.

## Patentansprüche

1. Einrichtung (1) zum Sperren und Freigeben einer Fluidströmung, mit
einem Fluid-Einlass (3) und einem Fluid-Auslass (4),
einer zwischen Fluid-Einlass (3) und Fluid-Auslass (4) im Fluidweg angeordneten Hauptöffnung (5),
einem der Hauptöffnung (5) zugeordneten Hauptsperrmittel (6), welches zu der Hauptöffnung (5) wenigstens eine Schließstellung und eine Offenstellung einnehmen kann,
einer Betätigungseinrichtung (7, 8, 9, 10, 11, 12, 13), welche das Hauptsperrmittel (6) aus der Offenstellung in die Schließstellung bewegen kann, wobei
das Hauptsperrmittel (6) in der Schließstellung derart angeordnet ist, dass ein am Fluid-Einlass (3) gegenüber dem Fluid-Auslass (4) erhöhter Fluiddruck eine das Hauptsperrmittel (6) in der Schließstellung haltende Andruckkraft hervorruft,
dass ein Fluid-Überstromweg (14) zwischen Fluideinlass (3) und Fluid-Auslass (4) vorgesehen ist, welcher durch die Betätigungseinrichtung (7, 8, 9, 10, 11, 12, 13) schließbar ist,
**dadurch gekennzeichnet**, die Einrichtung derart ausgebildet ist,
dass das Hauptsperrmittel (6) durch die Betätigungseinrichtung (7, 8, 9, 10, 11, 12, 13) aus der Schließstellung entsperrbar ist, so dass die Betätigungseinrichtung keine haltende Andruckkraft auf das Hauptsperrmittel ausübt, und der Fluid-Überstromweg (14) von der Betätigungseinrichtung öffnenbar ist,
dass in der Freigabestellung auf das Hauptsperrmittel (6) eine Öffnungskraft durch eine Vorspannung des Hauptsperrmittels in Richtung der Offenstellung ausgeübt wird, so dass es in der Schließstellung nur verbleibt, falls der Fluiddruck die Vorspannung überkompensiert.

2. Einrichtung nach Anspruch 1, **dadurch gekennzeichnet, dass** das Hauptsperrmittel (6) einen Ventilteller aufweist, welcher an die Begrenzungen der Hauptöffnung (5) dichtend anlegbar ist.

3. Einrichtung nach einem der Ansprüche 1 bis 2, **dadurch gekennzeichnet, dass** der Überstromweg (14) als Durchgangsöffnung in dem Hauptsperrmittel ausgebildet ist.

4. Einrichtung nach einem der Ansprüche 1 bis 3, **dadurch gekennzeichnet, dass** die Betätigungseinrichtung (7, 8, 9, 10, 11, 12, 13) einen bewegbaren Halteabschnitt (13) aufweist, auf dem das Hauptsperrmittel zwischen zwei Anschlägen (8, 9) verschiebbar gehalten ist, wobei ein erster (9) der Anschläge derart angeordnet ist, dass dieser beim Bewegen in die Schließstellung am Hauptsperrmittel (6) anliegt.

5. Einrichtung nach Anspruch 4, **dadurch gekennzeichnet, dass** der erste Anschlag (9) in der Freigabestellung von dem Hauptsperrmittel (6) beabstandet ist und eine Endlage für das Hauptsperrmittel in der Öffnungsstellung bildet.

6. Einrichtung nach Anspruch 4 oder 5, **dadurch gekennzeichnet, dass** ein Federelement (11) zwischen einem (8) der Anschläge und dem Hauptsperrmittel (6) angeordnet ist, durch welches das Hauptsperrmittel in der Freigabestellung vorgespannt ist.

7. Einrichtung nach einem der Ansprüche 4 bis 6, **dadurch gekennzeichnet, dass** der Halteabschnitt (13) zwischen den Anschlägen (8, 9) stabförmig ausgebildet und durch das Hauptsperrmittel (6) hindurchgeführt ist, so dass das Hauptsperrmittel zwischen den Anschlägen auf dem Halteabschnitt gleitend gehalten ist.

8. Einrichtung nach Anspruch 7, **dadurch gekennzeichnet, dass** der Überstromweg (24) zwischen dem Hauptsperrmittel und dem Halteabschnitt ausgebildet ist.

9. Einrichtung nach einem der Ansprüche 4 bis 8, **dadurch gekennzeichnet, dass** der erste Anschlag (9) eine tellerförmige Anlage aufweist, die dichtend an dem Hauptsperrmittel (6) anlegbar ist, so dass bei Anlage an dem Hauptsperrmittel der Überstromweg geschlossen ist.

10. Einrichtung nach einem der vorstehenden Ansprüche, **dadurch gekennzeichnet, dass** der Überstromweg derart ausgebildet ist, dass bei einem vorgegebenen maximalen Druckgefälle zwischen Einlass und Auslass das durchströmende Fluid einen vorgegebenen Fluid-Volumenstrom nicht übersteigt.

11. Gaszähler mit einer Einrichtung nach einem der vorstehenden Ansprüche.

## Claims

1. A device for blocking and releasing a fluid flow including a fluid inlet (3) and a fluid outlet (4), a main opening (5) arranged in the fluid path between the fluid inlet (3) and fluid outlet (4), a main blocking means (6) which is associated with the main opening (5) and can adopt at least a closed position and an open position with respect to the main opening (5), an actuating device (7, 8, 9, 10, 11, 12, 13), which can move the main blocking means (6) out of the open position into the closed position, wherein the main blocking means (6) is so arranged in the closed position that a fluid pressure at the fluid inlet (3), which is elevated with respect to the fluid outlet (4), results in a pressure which retains the main blocking means (6) in the closed position, that a fluid overflow path (14) is provided between the fluid inlet (3) and fluid outlet (4), which is closable by the actuating device (7, 8, 9, 10, 11, 12, 13), **characterised in that** the device is so constructed that the main blocking means (6) is releasable from the closed position by the actuating device (7, 8, 9, 10, 11, 12, 13). The actuating device does not exert a retaining pressure on the main blocking means and the fluid overflow path (14) is openable by the actuating device, that, in the released position, an opening force is exerted on the main blocking means (6) by a biasing of the main blocking means in the direction of the open position so that it only remains in the closed position if the fluid pressure overcompensates for the biasing force.

2. A device as claimed in claim 1, **characterised** that in the blocking means (6) has a valve plate, which is sealingly engagable with the margins of the main opening (5).

3. A device as claimed in one of claims 1 to 2, **characterised in that** the overflow path (14) is constructed as a flow opening in the main blocking means.

4. A device as claimed in claims 1 to 3, **characterised in that** the actuating device (7, 8, 9, 10, 11, 12, 13) has a movable retaining section, on which the main blocking means is movably held between two stops (8, 9), wherein a first (9) of the stops is so arranged that it engages the main blocking means (6) on movement into the closed position.

5. A device is claimed in claim 4, **characterised in that** the first stop (9) is spaced from the main blocking means (6) in the released position and defines an end position for the main blocking means in the open position.

6. A device is claimed in claim 4 or 5, **characterised in that** a spring element (11) is arranged between one (8) of the stops and the main blocking means (6), by which the main blocking means is braised into the released position.

7. A device is claimed in one of claims 4 to 6, **characterised in that** the retaining section (13) between the stops (8, 9) is of rod shape and passes through the main blocking means (6) so that the main blocking means is slidingly retained on the retaining section between the stops.

8. A device is claimed in claim 7, **characterised in that** the overflow path (24) is formed between the main blocking means and the retaining section.

9. A device is claimed in one of claims 4 to 8, **characterised in that** the first stop (9) has a plate-shaped engagement surface, which is sealingly engagable with the main blocking means so that when it engages the main blocking means (6) the overflow path is closed.

10. A device is claimed in one of the preceding claims, **characterised in that** the overflow path is so constructed that with a predetermined maximum pressure drop between the inlet and outlet, the fluid flowing though does not exceed a predetermined fluid flow volume.

11. A gas meter with a device as claimed in one of the preceding claims.

## Revendications

1. Dispositif (1) pour bloquer et libérer un écoulement de fluide, comprenant :
une entrée de fluide (3) et une sortie de fluide (4),
une ouverture principale (5) ménagée dans le trajet de fluide entre l'entrée de fluide (3) et la sortie de fluide (4),
un moyen de blocage principal (6) affecté à l'ouverture principale (5), qui peut adopter par rapport à l'ouverture principale (5) au moins une position de fermeture et une position d'ouverture,
un dispositif de commande (7, 8, 9, 10, 11, 12, 13) qui peut déplacer le moyen de blocage principal (6) de la position d'ouverture à la position de fermeture, dans lequel
le moyen de blocage principal (6) est agencé en position de fermeture de sorte qu'une pression de fluide augmentée à l'entrée de fluide (3) par rapport à la sortie de fluide (4) entraîne une force de pression maintenant le moyen de blocage principal (6) en position de fermeture et
qu'il soit prévu un trajet de débordement de fluide (14) entre l'entrée de fluide (3) et la sortie de fluide (4), qui puisse être fermé par le dispositif de commande (7, 8, 9, 10, 11, 12, 13),
**caractérisé en ce que**
le dispositif est conformé de sorte que le moyen de blocage principal (6) puisse être débloqué par le dispositif de commande (7, 8, 9, 10, 11, 12, 13) de sa position de fermeture pour que le dispositif de commande n'exerce aucune force de pression de maintien sur le moyen de blocage principal et que le trajet de débordement de fluide (14) puisse être ouvert par le dispositif de commande, et,
en position de libération, une pression d'ouverture est exercée sur le moyen de blocage principal (6) par une précontrainte du moyen de blocage principal en direction de la position d'ouverture de sorte qu'il ne reste en position de fermeture que si la pression du fluide surcompense la précontrainte.

2. Dispositif selon la revendication 1, **caractérisé en ce que** le moyen de blocage principal (6) présente un plateau de soupape qui peut s'appliquer de manière étanche aux délimitations de l'ouverture principale (5).

3. Dispositif selon l'une quelconque des revendications 1 à 2, **caractérisé en ce que** le trajet de débordement (14) se présente sous la forme d'une ouverture de passage dans le moyen de blocage principal.

4. Dispositif selon l'une quelconque des revendications 1 à 3, **caractérisé en ce que** le dispositif de commande (7, 8, 9, 10, 11, 12, 13) présente une section de maintien mobile (13), sur laquelle le moyen de blocage principal est maintenu de manière déplaçable entre deux butées (8, 9), dans lequel une première (9) des butées est aménagée de sorte qu'elle soit appliquée, lors du déplacement en position de fermeture, sur le moyen de blocage principal (6).

5. Dispositif selon la revendication 4, **caractérisé en ce que** la première butée (9) est distante du moyen de blocage principal (6) en position de libération et forme une position terminale pour le moyen de blocage principal en position d'ouverture.

6. Dispositif selon la revendication 4 ou 5, **caractérisé en ce qu'**un élément à ressort (11) est aménagé entre l'une (8) des butées et le moyen de blocage principal (6), par le biais duquel le moyen de blocage principal est précontraint en position de libération.

7. Dispositif selon l'une quelconque des revendications 4 à 6, **caractérisé en ce que** la section de maintien (13) entre les butées (8, 9) se présente sous la forme d'une tige et est passée à travers le moyen de blocage principal (6) de sorte que le moyen de blocage principal soit maintenu en coulissant entre les butées sur la section de maintien.

8. Dispositif selon la revendication 7, **caractérisé en ce que** le trajet de débordement (24) est formé entre le moyen de blocage principal et la section de maintien.

9. Dispositif selon l'une quelconque des revendications 4 à 8, **caractérisé en ce que** la première butée (9) présente un appui en forme de plateau, qui peut s'appliquer de manière étanche sur le moyen de blocage principal (6) de sorte que le trajet de débordement soit fermé par appui sur le moyen de blocage principal.

10. Dispositif selon l'une quelconque des revendications précédentes, **caractérisé en ce que** le trajet de débordement est formé de sorte que, dans le cas d'une différence de pression maximale prédéfinie entre l'entrée et la sortie, le fluide traversant ne dépasse pas un courant volumique prédéfini.

11. Compteur de gaz avec un dispositif selon l'une quelconque des revendications précédentes.
